# EUROPEAN PATENT SPECIFICATION

(11) **EP 0 736 215 B1**
(45) Date of publication and mention of the grant of the patent: **14.10.1998**
(21) Application number: 95903853.0
(22) Date of filing: 19.12.1994
(51) Int. Cl.: H01B 3/26, C08L 91/00, C08L 95/00

(54) **CABLE JOINT**
KABELVERBINDUNG
RACCORDEMENT DE CABLE

(30) Priority: 22.12.1993 GB 9326162; 05.01.1994 GB 9400079
(43) Date of publication of application: 09.10.1996
(73) Proprietor: RAYCHEM LIMITED, Dorcan, Swindon, Wiltshire SN3 5HH (GB)
(72) Inventor: ELLIS, Leonard, John, Chester CH2 1BD (GB)
(74) Representative: Jones, David Colin
(86) International application number: GB9402763
(87) International publication number: WO9517756

(56) References cited:
- DE-A- 1 620 811
- DE-B- 1 227 968
- GB-A- 605 057

## Description

This invention relates to an electrically insulating material, which is suitable, for example, for use as an insulating filler for an electric cable joint, in particular for a joint designed to operate at a voltage of about 1kV, or more, say about 17.5kV or 24kV or 36kV, and to a cable joint having such material contained within a housing therearound.

Electric cable joints are traditionally made using a variety of technologies, including heat shrinkable polymeric or elastomeric materials, bitumen (sometimes referred to as asphalt), tape winding, and curing resin systems. Each has its advantages and disadvantages. Heat shrink polymeric material, bitumen and some resin systems require the application of heat in situ, tape winding requires high operator skill to avoid entrapment of air, and curing systems often involve the use of materials, such as polyurethanes and epoxies, that can pose a health hazard.

Documents DE 1227 968 and DE 16 20811 are concerned with electrically insulating compositions containing vegetable oil, bitumen and a rubber component.

It is an object of the present invention to provide a material that is electrically insulating, that does not require the application thereto of heat to ensure it adopts a form-stable state, is substantially not harmful to a cable jointer or to the environment, and which is easy to handle. In its application in an electric cable joint, the material should achieve form stability such that it is not urged away from the jointed conductors by pressure of any water present within the cable or which otherwise enters the cable joint region.

In accordance with one aspect of the present invention, there is provided an electrically insulating composition comprising
(a) a vegetable oil and a compatible resin, comprising from 40 to 100 parts by weight of the oil and 60 to 0 parts by weight of the resin;
(b) a latex, selected so as to be capable of forming a gel with the oil/resin mixture;
(c) a desiccant, present in an amount sufficient to absorb water from the latex on mixing therewith; and
(d) an inert filler present in an amount from 0 to 75% by weight of the total composition.

In the present invention, "resin" is understood to comprise rosin, modified rosin, rosin derivatives, hydrocarbon resins, terpene resins, and bitumen.

It has been found that mineral oils are unsuitable for some electric cable applications since they disadvantageously soften polymers commonly-used as insulation material, for example polyethylene and PVC, especially at high temperatures, which can lead to a deterioration of the performance of the cable and/or joint. Furthermore, although crude vegetable oils, such as soya bean, rape seed and linseed oils are suitable for various applications, after mixing with the other components of the composition, they can gel to a more solid form in an unacceptably short time - this time may be too short for example to ensure complete filling of a housing around a cable joint, as hereinafter described. To overcome this difficulty, it is preferred to use vegetable oils that are alkali-refined, that is to say crude oils from which the amount of free fatty acids has been reduced in accordance with BS684 (2), by the application of caustic soda or caustic potash for example. Since the composition can require a mixing with a resin, preferably bitumen, compatibility therebetween is necessary to the extent that an ultimate mixture without separation of the components, such as a gel, is formed. In this respect, it has been discovered that castor oil and bitumen, for example, are incompatible. A gel has been found to be very desirable in cable joint applications, in order to give the composition tack to enhance adherence to components of the joint.

When used in the composition, a soft grade of resin, such as 200 Penetration Grade bitumen, is preferred, but in compositions with comparatively low amounts of bitumen, the actual grade becomes less relevant. The amount of resin present, if any, depends on the viscosity required of the final composition, the greater the ratio of resin to oil giving rise to a more viscous material, which thus physically becomes more difficult to mix and, in the case of a cable joint for example, more difficult to cause to fill all the interstices around the components of the cable joint. It will be appreciated, however, that the temperature will have an effect on the viscosity, and thus on the amount and grade of the resin selected. The ratio of oil to resin may be 50/50, but such a composition may be found to be too viscous at lower ambient temperatures, so that a higher proportion of oil is preferred, say 60/40, or more preferably 80/20 by weight. In some circumstances, however, it is to be understood that no resin may be required at all.

The rubber component of the latex, which is an anionic emulsion, will, on mixing, absorb the oil and resin, and the water of the latex is absorbed by the desiccant. Since in the application of the composition in an electric cable joint, it is important that there be no free water, care has to be taken to ensure that there is a safety excess of desiccant in the final composition not only to absorb the water in the latex but also any excess in the ambient environment. Preferably the latex comprises a styrene butadiene rubber, and preferably the latex has a high solids content.

The desiccant may be a suitable basic anhydride, preferably calcium oxide.

Any suitable type and amount of filler may be selected for use in the composition, provided it is inert. Its function is to provide bulk for the composition at low cost. Furthermore, the inert filler also conveniently absorbs heat from the exothermic reation between the desiccant and the water and can also increase the thermal conductivity of the composition, to enhance heat dissipation in operation of a cable joint for example. Sand is the preferred inert filler, but others, for example chalk, alone or in combination with sand, may be used. The inert filler preferably comprises at least 20%, more preferably 30%, and most preferably at least 55% by weight of the total composition.

If desired, a trace amount, say less than about 3%, and preferably less than about 2%, by weight, of a structuring or anti-settling agent may be included in the oil/resin/desiccant mixture. Such an agent may comprise fumed silica, referably Cabosil TS720, or modified derivatives of castor oil.

The composition of the invention can conveniently be provided in three-part form, with the oil, resin, desiccant and structuring components forming one part, the latex another, and the inert filler the third part. The parts may be simply mixed together using a manual stirring or a mechanical stirring arrangement. However it is preferred to add the latex component using manual stirring only. It is important to disperse the latex fully, by generating a sufficient amount of shear in the mixing process, this being enhanced by the presence of the inert filler. In one formulation, the composition comprises about 30% by weight of the first part, about 5% by weight of the second part (latex), and about 65% by weight of the third part (inert filler). However, the ratio of the first two parts may vary from these values. For example, in another formulation, the first part may comprise about 45%, the second part about 7% and the third part about 48%. Furthermore, the lower the amount of the latex, the lower is the amount of the inert filler that is needed to counteract the exothermic reaction. However, it is preferred to maintain the amount of the inert filler at a relatively high level due to its comparatively low cost. The hardness of the composition can be increased by increasing the proportion of latex present, and this will require a corresponding increase in the amount of desiccant in order to absorb the increase in the water content of the composition.

When properly mixed, the composition is of pourable consistency. A chemical reaction then sets in which results in the consistency becoming that of a soft solid. The composition is not cross-linked, and the reaction is different from the mere drying by evaporation of water or of a solvent.

It has been found that the composition of the invention is resistant to water only to a limited degree, and is thus preferably used in those cable joints that are sealed against ingress of water by other means, or the composition may be used in other applications that involve no, or very little, exposure to moisture, or in applications in which uptake of water over a prolonged period is not a concern. However, in applications, for example in some configuration of cable joints, where the insulating material of the invention may be exposed to moisture or water, a more water-resistent oil may be used. For example, the vegetable oil of the composition of the invention may be refined, or further refined, to produce an oleo chemical, for example 2-ethylhexyl oleate.

Although bitumen, for example, is well known for use on its own as an electrical insulation material in cable joints, it has been found surprising that the composition of the present invention containing a limited, and particularly a zero, amount of bitumen, or other resin, in combination with a water-containing latex, is suitable for such applications.

In accordance with a further aspect of the invention, there is provided an electric cable joint comprising a rigid housing arranged to enclose jointed conductors of at least two cables and to be sealed to the cables, and an electrically insulating composition as hereinbefore described for substantially filling the housing around the joint region of the cables.

Advantageously, the housing is formed from at least two components, preferably half-shells, arranged to be secured together around the jointed cables.

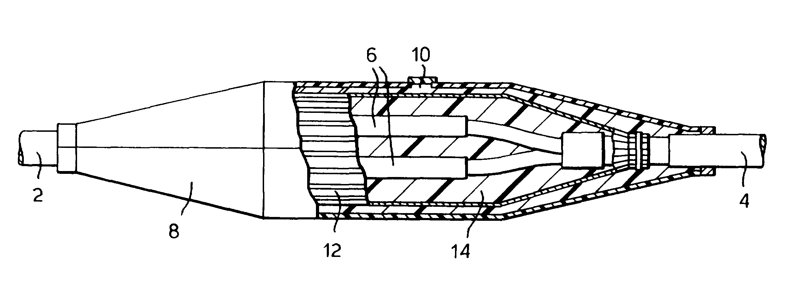

The present invention will now be described, by way of example, with reference to the accompanying drawing showing in schematic form the composition applied to insulate a 17.5kV cable joint.

The drawing shows an in-line joint between two three-core 17.5kV plastic insulated cables 2, 4 (only two of the cores being shown). The conductors are shown diagrammatically spliced at 6, and will in a conventional manner have primary insulation applied therearound. A rigid housing 8 of insulating plastics material is formed from two half-shells and secured around the splice regions 6 and on to respective cables 2, 4 at each end thereof. The housing 8 has a sealable filling aperture 10 in an upper surface thereof. Electrical earth continuity across the joint is provided by an apertured metal sheet 12 wrapped therearound within the housing 8 and secured at each end to the cables 2, 4.

A pourable, insulating and sealing composition 14 is poured into the housing 8 through the aperture 10 so as completely to fill the interior thereof, around the cables 2, 4 and between the individual cores of the splice region 6. The aperture 10 is then sealed and the composition 14 allowed to undergo its chemical reaction and change of state to a more viscous, soft solid material that adheres to the joint components and to the housing 8. The reacted composition 14 will then remain in place around the cables in the joint region even during thermal cycling of the joint and on reaching operating temperatures of the order of 95°C.

The joint filler composition 14 comprises a three part mixture as follows:

| Composition I | |
|---|---|
| Part A | By Weight of Total Composition |
| Alkali-refined soya bean oil | 33.88% |
| Fumed Silica (Cabosil TS720) | 0.16% |
| Oil-Coated Calcium Oxide | 10.90% |

| Part B | |
|---|---|
| SBR Latex | 6.91% |

| Part C | |
|---|---|
| Sand | 48.15% |

Parts A, B, and C were then thoroughly mixed to provide a sufficient quantity of filler material for one joint.

As can be seen, this composition contains no resin.

An alternative composition, including a small amount, less than 5%, of resin, in the form of bitumen, is as follows :-

| Composition II | |
|---|---|
| Part A | By Weight (approximately) |
| Alkali-refined soya bean oil | 60% ) |
| Bitumen, 200 Penetration Grade | 15% ) 30% of |
| Fumed silica (structuring agent) | 0.4% ) total weight |
| Oil coated calcium oxide | 24% ) |

| Part B | |
|---|---|
| SBR latex | 5% of total weight |

| Part C | |
|---|---|
| Sand | 65% of total weight |

Joints produced with these formulations were subjected to standard qualification tests and were found to perform satisfactorily. Subsequently upon opening the housing to examine the joint physically, it was found to be unexpectedly easy to remove the filler material from the cable components, thus allowing re-entry of the joint. It will be appreciated that such re-entry is generally not possible with cold-pour curable systems, and is not so convenient with bitumen filled joints.

## Claims

1. An electrically-insulating composition comprising
(a) a vegetable oil and a compatible resin, comprising from 40 to 100 parts by weight of the oil and 60 to 0 parts by weight of the resin;
(b) a latex, selected so as to be capable of forming a gel with the oil/resin mixture;
(c) a desiccant, present in an amount sufficient to absorb water from the latex on mixing therewith; and
(d) an inert filler present in an amount from 0 to 75% by weight of the total composition.

2. A composition according to claim 1, wherein the vegetable oil is alkali-refined.

3. A composition according to claim 1 or claim 2, wherein the vegetable oil is selected from soyabean oil and rapeseed oil.

4. A composition according to any preceding claim, wherein the resin, when present, comprises a bitumen, preferably 200 Penetration Grade.

5. A composition according to any one of the preceding claims, wherein the ratio of the oil to resin is at least 60/40, and preferably 80/20.

6. A composition according to any one of the preceding claims, wherein the desiccant comprises 25% by weight of the mixture comprising the oil, resin and desiccant.

7. A composition according to any one of the preceding claims, wherein the amount of inert filler comprises at least 20%, preferably 30%, and most preferably 55% of the total composition.

8. A composition according to any one of the preceding claims, comprising 30% of oil/resin/desiccant, 5% of latex, and 65% of inert filler, the percentages being by weight of the total weight of these components.

9. A composition according to any one of claims 1 to 7, comprising 45% of oil/desiccant, 7% of latex, and 48% of inert filler, the percentages being by weight of the total weight of these components.

10. An electric cable joint comprising a rigid housing arranged to enclose jointed conductors of at least two cables and to be sealed to the cables, and a composition according to any one of the preceding claims for substantially filling the housing around the joint region of the cables.

## Patentansprüche

1. Elektrisch isolierende Zusammensetzung, die folgendes aufweist:
(a) ein Pflanzenöl und ein kompatibles Harz, wobei die Zusammensetzung 40 bis 100 Gewichtsteile des Öls und 60 bis 0 Gewichtsteile des Harzes aufweist;
(b) einen Latex, der so ausgewählt, daß er fähig ist, ein Gel mit dem Öl/Harz-Gemisch zu bilden;
(c) ein Trockenmittel, das in einer Menge anwesend ist, die ausreicht, um Wasser aus dem Latex beim Vermischen damit zu absorbieren; und
(d) einen inerten Füllstoff, der in einer Menge von 0 bis 75 Gew.-% der Gesamtzusammensetzung anwesend ist.

2. Zusammensetzung nach Anspruch 1,
wobei das Pflanzenöl alkaliraffiniert ist.

3. Zusammensetzung nach Anspruch 1 oder Anspruch 2,
wobei das Pflanzenöl aus Sojaöl und Rapsöl ausgewählt ist.

4. Zusammensetzung nach einem der vorhergehenden Ansprüche,
wobei das Harz, wenn es anwesend ist, Bitumen, bevorzugt der Penetrationsgüteklasse 200, aufweist.

5. Zusammensetzung nach einem der vorhergehenden Ansprüche,
wobei das Verhältnis von Öl zu Harz wenigstens 60/40 und bevorzugt 80/20 ist.

6. Zusammensetzung nach einem der vorhergehenden Ansprüche,
wobei das Trockenmittel 25 Gew.-% des Gemischs beträgt, das das Öl, das Harz und das Trockenmittel aufweist.

7. Zusammensetzung nach einem der vorhergehenden Ansprüche,
wobei die Menge an inertem Füllstoff wenigstens 20 %, bevorzugt 30 % und am stärksten bevorzugt 55 % der Gesamtzusammensetzung beträgt.

8. Zusammensetzung nach einem der vorhergehenden Ansprüche,
die 30 % Öl/Harz/Trockenmittel, 5 % Latex und 65 % inerten Füllstoff aufweist, wobei die Prozentsätze Gewichtsprozentsätze des Gesamtgewichts dieser Bestandteile sind.

9. Zusammensetzung nach einem der Ansprüche 1 bis 7,
die 45 % Öl/Trockenmittel, 7 % Latex und 48 % inerten Füllstoff aufweist, wobei die Prozentsätze Gewichtsprozentsätze des Gesamtgewichts dieser Bestandteile sind.

10. Elektrische Kabelverbindung, die folgendes aufweist: ein starres Gehäuse, das dazu angeordnet ist, daß es miteinander verbundene Leiter von wenigstens zwei Kabeln umschließt und mit den Kabeln dicht verbunden wird, und eine Zusammensetzung nach einem der vorhergehenden Ansprüche, um das Gehäuse um den Verbindungsbereich der Kabel herum im wesentlichen auszufüllen.

## Revendications

1. Composition électriquement isolante comportant
(a) une huile végétale et une résine compatible, comprenant 40 à 100 parties en poids de l'huile et 60 à 0 parties en poids de la résine ;
(b) un latex choisi de façon à pouvoir former un gel avec le mélange huile/résine ;
(c) un desséchant présent en quantité suffisante pour absorber l'eau provenant du latex en se mélangeant avec lui ; et
(d) une charge inerte présente en quantité de 0 à 75 % en poids de la composition totale.

2. Composition selon la revendication 1, dans laquelle l'huile végétale est une huile à raffinage alcalin.

3. Composition selon la revendication 1 ou la revendication 2, dans laquelle l'huile végétale est choisie entre de l'huile de soja et de l'huile de colza.

4. Composition selon l'une quelconque des revendications précédentes, dans laquelle la résine, lorsqu'elle est présente, comprend un bitume, avantageusement d'un degré de pénétration de 200 (200 Penetration Grade).

5. Composition selon l'une quelconque des revendications précédentes, dans laquelle le rapport de l'huile à la résine est d'au moins 60/40, et avantageusement 80/20.

6. Composition selon l'une quelconque des revendications précédentes, dans laquelle le desséchant comprend 25 % en poids du mélange comprenant l'huile, la résine et le desséchant.

7. Composition selon l'une quelconque des revendications précédentes, dans laquelle la quantité de charge inerte comprend au moins 20 %, avantageusement 30 % et le plus avantageusement 55 % de la composition totale.

8. Composition selon l'une quelconque des revendications précédentes, comprenant 30 % d'huile/résine/desséchant, 5 % de latex, et 65 % de charge inerte, les pourcentages étant en poids du poids total de ces constituants.

9. Composition selon l'une quelconque des revendications 1 à 7, comprenant 45 % d'huile/desséchant, 7 % de latex et 48 % de charge inerte, les pourcentages étant en poids du poids total de ces constituants.

10. Jonction de câbles électriques comportant un boîtier rigide agencé de façon à renfermer des conducteurs raccordés d'au moins deux câbles et à être scellé de façon étanche sur les câbles, et une composition selon l'une quelconque des revendications précédentes pour remplir sensiblement le boîtier autour de la région de jonction des câbles.
